# EUROPÄISCHE PATENTSCHRIFT

(11) **EP 2 098 640 B1**
(45) Veröffentlichungstag und Bekanntmachung des Hinweises auf die Patenterteilung: **10.06.2015**
(21) Anmeldenummer: 09001149.5
(22) Anmeldetag: 28.01.2009
(51) Int. Cl.: E02B 8/08

(54) **Vorrichtung für den Abstieg von Aalen an Wasserbauwerken**
Device for lowering eels to hydraulic structures
Dispositif de descente d'anguilles sur des bâtiments maritimes

(30) Priorität: 05.03.2008 DE 102008012718
(43) Veröffentlichungstag der Anmeldung: 09.09.2009
(60) Teilanmeldung: 13181367.7
(73) Patentinhaber: Universität Kassel, 34125 Kassel (DE)
(72) Erfinder: Hassinger, Reinhard, Dr., 34317 Habichtswald (DE)
(74) Vertreter: Patentanwälte Olbricht Buchhold Keulertz

(56) Entgegenhaltungen:
- EP-A2- 1 132 524
- WO-A1-2005/007975
- DE-U1- 20 015 491

## Beschreibung

Die Erfindung betrifft eine Vorrichtung für den Abstieg von Aalen an Wasserbauwerken gemäß dem Oberbegriff von Anspruch 1.

Aale (*Anguillidae*) sind begehrte Speisefische, jedoch in ihrem Bestand weltweit stark bedroht. Ein besonderes Problem dabei ist, dass es bisher unmöglich ist, Aale - beispielsweise zum Verzehr - in Kultur bis zum Erwachsenenstadium zu züchten. Als katadrome Wanderfische weisen sie außerdem eine weitere Besonderheit auf. Sie laichen im Meer, wandern als Larven bzw. Glasaale weite Strecken zu Flussmündungen und schließlich als sogen. Steigaale im Süßwasser flussaufwärts. Nachdem sie Jahre später in den oberen Flussregionen das Adultstadium erreicht haben, treten sie die Rückwanderung zu den Laichplätzen in der Sargassosee an. Dabei legen sie in stetigen Fliessgewässern häufig ein für sie spezielles und typisches, energiesparendes Wanderverhalten an den Tag: Sie lassen sich einfach im Mittelwasser oder sogar dicht über der Sohle mit nur wenigen Schwimmbewegungen in Strömungsrichtung treiben. Treffen sie dabei auf ein Hindernis, wird sofort ein nahezu 180" der Strömung entgegensetztes Fluchtverhalten gezeigt. Dabei versucht der Aal zur Flusssohle abzutauchen und dort Schutz zu finden. Eine Quersuchbewegung entlang des Hindernisses, wie sie andere Fische zeigen, wird in der Regel nicht ausgeführt. Vielmehr orientieren sich die Aale einerseits an der Strömungsrichtung selbst, was sie zwangsweise immer wieder zu dem Hindernis führt. Andererseits spielt die olfaktorische Orientierung eine große Rolle, was aber ebenfalls häufig durch natürlich auch in der Hauptströmungsrichtung verteilte Duftstoffe einen erneuten Zusammenstoss mit dem Hindernis hervorruft.

Unter den bekannten Wasserbauwerken stellen Wasserkraftanlagen eine besondere Gefahr für die flussabwärts wandernden Aale dar. Zwar sind diese häufig mit Fischabweisern versehen, die einen Einstieg von Fischen in die Anlage verhindern sollen. Umgehende Fischpässe, die beispielsweise junge Lachse oder Meerforellen beim Absteigen nutzen, sind jedoch aufgrund ihres besonderen Verhaltens für die Aale meistens nicht auffindbar. Da aber für die Aale als katadrome Wanderfischart ein großer biologischer Drang zum Absteigen herrscht, versuchen sie mit allen Mitteln das Hindernis zu überwinden und geraten dabei häufig in die Turbinen der Wasserkraftanlagen. Dies stellt, neben der im großen Stil betriebenen Glasaal-Fischerei und parasitärem Befall, eine der großen Bedrohungen für den Erhalt der Arten dar. Es ist daher dringend geboten, eine für Aale auffindbare Umgehungsmöglichkeit solcher Wasserbauwerke zu schaffen.

EP 1 123 524 A offenbart eine gattungsgemäße Vorrichtung mit einer Sammelleitung für Aale, die im Oberwasser quer vor dem Hindernis angeordnet ist. Sie hat mindestens eine Eintrittsöffnung im Oberwasser und eine Austrittsöffnung im Unterwasser, wobei die Eintrittsöffnung entgegen der Strömung, also zur Unterwasserseite liegt. Ferner ist eine Bypassleitung mit einem Be- und Entlüftungsstutzen zur Reinigung der Leitung vorgesehen. Problematisch hierbei ist jedoch, dass die Eintrittsöffnungen für die Aale entgegen der Strömung nur schwer zu finden sind. Zwar können vom Hindernis fliehende Aale durch Zufall auf eine der Öffnungen stoßen - sofern sie jedoch die Sohle stromaufwärts der Sammelleitung erreichen sind die Öffnungen auf der ihnen abgewandten Seite für sie verborgen. Auch ein möglicherweise von den Öffnungen ausgehender Lockstrom ist für die Aale nicht oder nur sehr schwer zu lokalisieren, da er von der Stärke der allgemeinen Strömung, die in Richtung auf das Hindernis führt, normalerweise überdeckt wird. Darüber hinaus kann das Umgehungssystem zwar ent- und belüftet werden, ein Reinigen der Leitungen ist jedoch nur mit zusätzlichen Mitteln möglich, so dass die Leitungen rasch verstopfen können. Hinzu kommt, dass die Sammelleitung direkt in das Unterwasser mündet, was bei üblicherweise mehreren Metern Fallhöhe zu starken Druckhöhendifferenzen führen kann. Dies kann sich für Aale, welche die Umleitung gefunden haben, sehr schädlich auswirken. Wenn die Bypassleitung das Oberwasser direkt mit dem Unterwasser verbindet, stellt sich außerdem wegen der großen Druckdifferenz eine sehr starke Strömung ein, die zu großen Einströmgeschwindigkeiten in den Löchern im Sammelrohr führt. Dort werden die Aale durch scharfe Kanten, hohe Turbulenz und Armaturen in der Leitung möglicherweise geschädigt.

Auch andere, z.B. WO 0 177 442 A, DE 2 970 3 497 U und FR 27 36 949 A1, offenbaren bis auf eine zur Umleitung vorgesehene Sammelleitung keine zufrieden stellenden Lösungen. Sie können insbesondere nicht gewährleisten, dass die Aale den Einstieg in die Umleitung trotz der vorhandenen Fliessgewässer-Strömung auffinden können.

Ziel der Erfindung ist es daher, diese und weitere Nachteile des Standes der Technik zu beseitigen und eine Vorrichtung für den Abstieg von Aalen an Wasserbauwerken zu schaffen, die es den Aalen aber auch anderen im Fliessgewässer absteigenden Lebewesen ermöglicht, ein Wasserbauwerk sicher zu umgehen. Vor allem soll die Erfindung eine Lösung bereitstellen, die ein Auffinden des Umleitungssystems durch die Aale auch tatsächlich sicherstellt. Die Vorrichtung soll ferner mit einfachen Mitteln kostengünstig aufgebaut sein. Angestrebt wird zudem eine einfache Handhabung, die auch nach Jahren im Betrieb funktioniert und einfach zu reinigen ist.

Hauptmerkmale der Erfindung sind im kennzeichnenden Teil des Anspruchs 1 angegeben. Ausgestaltungen sind Gegenstand der Ansprüche 2 bis 10.

Bei einer Vorrichtung für den Abstieg von Aalen an Wasserbauwerken vor einem im Oberwasser angeordneten Fischschutz mit einem Umleitungssystem zur Umgehung des Wasserbauwerkes, das zur Aufnahme der Aale im Oberwasser wenigstens eine Sammelleitung mit wenigstens einer Öffnung, die im Bereich der Sohle des in Strömungsrichtung fließenden Fliessgewässers angeordnet ist, sieht die Erfindung vor, dass stromaufwärts der Öffnung oder der Öffnungen der Sammelleitung ein Strömungsschatten erzeugendes Element angeordnet ist.

Dabei ist der durch das Strömungsschatten erzeugende Element hervorgerufene Strömungsschatten von besonderer Bedeutung. Dieser herrscht im Bereich der Sammelleitung an der Sohle des Fließgewässers zwischen seinem erzeugenden Element und dem Fischschutzsystem. Besonders bevorzugt liegen dabei die Öffnungen der Sammelleitung im Strömungsschatten. Es ist weiter vorgesehen, dass eine Strömung in der Sammelleitung die Aale direkt in das Umleitungssystem leitet. Diese Strömung erzeugt einen Sog, der durch die Öffnungen der Sammelleitung wahrnehmbar ist. Es ist weiterhin vorgesehen, dass mittels einer zielgerichteten hydraulischen Dimensionierung dafür gesorgt wird, dass an allen Öffnungen die Strömungsverhältnisse annähernd gleich sind.

Nach einer Kollision mit dem Fischschutzsystem geraten die Aale bei ihrer nach unten gerichteten Flucht automatisch in den Bereich des Strömungsschattens. Dieser ermöglicht es den Aalen, sich vor dem Fischschutzsystem eine kurze Strecke in Querrichtung zur eigentlichen Strömung zu bewegen und eine Abstiegsmöglichkeit zu suchen. Weiter können die Aale nun im Strömungsschatten die im Verhältnis zur Strömung des Fließgewässers schwache Sogwirkung der Sammelleitung wahrnehmen. Auf diese Weise ist die Sammelleitung für die Aale stets gut auffindbar und sie können dem Lockstrom in das für sie sichere Umleitungssystem folgen.

Erfindungsgemäß ist das Strömungsschatten erzeugende Element an der Sohle des Fließgewässers angeordnet und riegelförmig oder balkenförmig ausgebildet, denn so ist es möglich, einen Strömungsschatten zu erzeugen, der sich über die gesamte Breite des zu versperrenden Hindernisses und des davor angeordneten Fischschutzsystems bzw. der Sammelleitung erstreckt.

Um nicht nur Aalen, die im Mittelwasser angetrieben kommen und von dem Fischschutzsystem aus in den Bereich des Strömungsschatten abtauchen, sondern auch Aalen und anderen Fischen, die bereits an der Sohle des Fließgewässers ankommen, das Passieren des Strömungsschatten erzeugenden Elementes zu ermöglichen, ist erfindungsgemäß vorgesehen, dass das Strömungsschatten erzeugende Element Durchschlupföffnungen aufweist. Diese sind darüber hinaus von Vorteil, wenn Aale vom Fischschutzsystem aus in einen zu weit stromaufwärts gelegenen Bereich der Sohle abtauchen und so gegebenenfalls auf das Strömungsschatten erzeugende Element selbst als Hindernis treffen würden.

Die Durchschlupföffnungen sollten in einem Winkel zur Strömung angeordnet sein, was einerseits die Wucht der Strömung beim Durchströmen der Durchschlupföffnung mindert.

Bei einer vorteilhaften Ausgestaltung des Strömungsschatten erzeugenden Elements in Form von Borstenelementen können diese zunächst auch als Versteckmöglichkeit für die Aale dienen. Die Borstenelemente sind dann einer für die Aale und für andere Bewohner von der Flusssohle nahen Bereichen gewohnten, natürlichen Umgebung relativ ähnlich. Dadurch wird auch das Risiko, dass die Tiere vor dem Strömungsschatten erzeugenden Element zurückschrecken und es nicht passieren, minimiert. Auch können Borstenelemente zumindest teilweise von der ankommenden Strömung schwach durchströmt werden und stellen so keine massive, möglicherweise für störende Turbulenzen sorgende Blockade dar. Stattdessen kommt es einfach zu einer Abschwächung aber nicht zu einer deutlichen Richtungsänderung der Strömung. Dies kann bei anderen Ausführungsvarianten mit Hilfe von Durchstromöffnungen realisiert werden, insgesamt bliebt so zunächst die für die Aale und andere absteigende Organismen wichtige Hauptrichtung der Strömung erhalten, sie führt sie jedoch in den Strömungsschatten zwischen dem Strömungsschatten erzeugenden Element und dem Fischschutzsystem. Dort ist die Hauptströmung dann so sehr abgeschwächt, dass die Tiere die in die Sammelleitung und das Umleitungssystem führenden Senkenströmung gut wahrnehmen und dieser in die Öffnungen der Sammelleitung folgen können.

Besonders vorteilhaft ist es außerdem, wenn die Borsten der Borstenelemente elastisch sind. Sie können dann beispielsweise durch die Strömung in Vibration versetzt werden. Dies kann wiederum zu einem gewissen Selbstreinigungseffekt führen, indem kleineres Treibgut und Detritus mit Hilfe der Schwingung der Borsten durch die Borstenelemente hindurch befördert wird.

Zweckmäßig ist vorgesehen, dass die Sammelleitung quer zur Strömung angeordnet ist. Konstruktiv ist es günstig, wenn die Sammelleitung ein Rohr ist. Dies ist vor allem in Hinblick auf eine einfache und materialgünstige Bauweise positiv. Weiterhin ist es von Vorteil, wenn die Sammelleitung mindestens den 5 bis 10fachen Durchmesser des Durchmessers eines adulten Aales hat, aber es sind auch deutlich größere Sammelleitungen vorstellbar. Besonders günstig ist es dabei, wenn die Sammelleitung zick-zack-förmig ausgebildet ist. Dabei kann die Sammelleitung bevorzugt flach über der Sohle des Fließgewässers liegen.

Verschiedene Ausführungsvarianten sind in Bezug auf die Anordnung der Öffnungen der Sammelleitung vorstellbar. So ist es einerseits möglich alle Öffnungen entgegen der Strömungsrichtung des Fließgewässers auszurichten. Vorstellbar ist auch, dass die Öffnungen abwechselnd in und entgegen der Strömungsrichtung oder auch dass die meisten Öffnungen entgegen der Strömungsrichtung und einige gelegentlich in Strömungsrichtung ausgerichtet sind. Wichtig ist, dass eine ausreichende Anzahl der Öffnungen dorthin ausgerichtet ist, wo der Strömungsschatten sich befindet, denn es ist zu erwarten, dass die meisten Tiere nachdem sie vom Fischschutzsystem zurückgeschreckt sind bzw. wenn sie an der Sohle ankommen, im Strömungsschatten des Strömungsschatten erzeugenden Elements nach dem Weg suchen.

Wichtig ist, dass die Öffnungen der Sammelleitung annähernd gleichmäßig über die Länge der Sammelleitung verteilt sind und dass beispielsweise mit hydraulischen Mitteln dafür gesorgt wird, dass durch alle Löcher annähernd der gleiche Durchfluss fließt, so dass davon annähernd die gleiche Sogwirkung ausgeht. Durch möglichst nicht zu große und regelmäßige Abstände zwischen den Öffnungen wird die Chance für die nur im geringen Maß Quersuchbewegungen ausführenden Tiere erhöht, eine der Öffnungen auch tatsächlich zu finden.

Weiterhin ist es wichtig, dass die Öffnungen der Sammelleitung im Bereich des von dem Strömungsschatten erzeugenden Elements erzeugten Strömungsschatten liegen. Dadurch ist gewährleistet, dass der Lockstrom, der die Aale in die Öffnungen führen soll, nicht von der Hauptströmung des Fließgewässers überdeckt wird.

Ist die Sammelleitung zick-zackförmig, so ist es besonders günstig, wenn die Öffnungen in den konkaven Eckpunkten der Sammelleitung angeordnet sind. Die Aale können auf diese Weise nicht nur durch den Lockstrom zu den Öffnungen geführt werden, sondern auch durch die trichterartig auf die Öffnungen zuführende Geometrie der Sammelleitung. Ebenfalls bei einer zick-zackförmigen Sammelleitung aber auch bei einer geraden Leitung können weitere Öffnungen jeweils in einer Ecke zwischen einem Ende der Sammelleitung und einer Seitenwand des Fließgewässers vorhanden sein. Dabei ist es sowohl denkbar, dass es sich bei der Seitenwand um eine natürliche Böschung handelt, als auch dass eine künstliche Seitenwand bei der Montage der Vorrichtung oder beim Bau des Wasserbauwerkes eingefügt wird.

Von besonderem Vorteil ist es dabei, wenn zusätzlich unterhalb der Sammelleitung wenigstens eine, bevorzugt zwei Leitschürzen angebracht sind. Diese verhindern ein Unterschwimmen der Sammelleitung.

Bei der Ausgestaltung einer Umleitungssystems ist es von Vorteil, wenn das Umleitungssystem eine Bypassleitung aufweist. Dabei ist es zweckmäßig, wenn die Sammelleitung in die Bypassleitung und diese wiederum in passender Höhe in ein Rinnensystem mündet, das die absteigenden Aale sicher in das Unterwasser führt. Hierzu eignet sich am besten der Fischpass. Durch diese Bypassleitung kann ein für die Aale und auch für andere die Umleitung nutzende Tiere schädlicher Druckabfall verhindert werden, der ansonsten entstehen könnte, wenn das Sammelrohr direkt in das Unterwasser mündete. In diesem Zusammenhang ist es auch von Vorteil, wenn an dem Fischpass stromabwärts der Mündung des Bypasses ein Überlauf ausgebildet ist. So kann der durch die infolge der Einnmündung des Aalabstiegs erhöhte Durchfluss wieder auf das normale Maß zurückgeführt werden ohne eine Gefahr sowohl für die über den Bypass in den Fischpass gelangenden als auch für andere den Fischpass nutzenden Tiere. Die Beileitung des Durchflusses der Aalabstiegsanlage in den Fischpass kann bei entsprechender Auslegung des Fischpasses darüber hinaus den Vorteil haben, dass der Lockstrom des Fischpasses deutlich verstärkt wird, so dass der Fischpass für aufsteigende Fische besser auffindbar wird.

Weiterführende Ausgestaltungsvarianten sehen vor, dass die Bypassleitung mit einem stromaufwärts liegenden aufsteigenden Teil und einem stromabwärts liegenden abfallenden Teil ausgebildet ist. Dazwischen kann ein Hochpunkt ausgebildet sein. Die Bypassleitung funktioniert dann als Heberleitung, bei der es möglich ist, die Tiere zunächst aus der Sammelleitung über das Flussniveau zu heben und dann kontrolliert hinab in den Fischpass gleiten zu lassen.

Ein im Hochpunkt oder im abfallenden Ast angeordneter Schieber ist ebenfalls von Vorteil. Dieser ermöglicht, die Bypassleitung z.B. zu Wartungs- und Reinigungszwecken zu erschließen. Dazu ist auch ein über einen Seitenanschluss mit dem Umleitungssystem verbundenes Pump- und Spülsystem zweckmäßig. Der am Umleitungssystem ausgebildete Seitenanschluss ist bevorzugt im Hochpunkt der Bypassleitung vor dem Schieber angeordnet, wodurch das Umleitungssystem mit dem Pump- und Spülsystem verbunden wird.

Zweckdienlich ist das Pump- und Spülsystem mit einem Vorratsbehälter ausgebildet. Auch ist in dem Fall, dass die Bypassleitung als Heberleitung angeordnet ist, vorgesehen, dass das Pump- und Spülsystem mit einer Vakuumpumpe ausgestattet wird. Diese dient beispielsweise dazu, bei offenem Schieber die Luft aus der Bypassleitung zu saugen und diesen Heber damit anspringen zu lassen. Bei geschlossenem Schieber dient die Vakuumpumpe dazu, den Vorratsbehälter über den Seitenanschluss mit Wasser aus dem Umleitungssystem zu füllen. Dazu ist es von Vorteil, wenn die Vakuumpumpe am Vorratsbehälter angeordnet bzw. angeschlossen ist.

Zur Belüftung des Vorratsbehälters und zum Ablassen des Wassers aus dem gefüllten Vorratsbehälters oder zum Unterbrechen der Strömung in der Bypassleitung ist die Ausbildung des Pump- und Spülsystems mit einem Luftventil vorteilhaft. Dieses kann ebenfalls am Vorratsbehälter angeordnet sein. Auf diese Weise ist ein sehr einfaches Durchspülen zur Reinigung der Bypassleitung vorstellbar. Bei geschlossenem Schieber und Luftventil wird zunächst mit Hilfe der Vakuumpumpe der Vorratsbehälter mit Wasser aus der Bypassleitung gefüllt. Anschließend wird das Luftventil geöffnet. Dadurch strömt das zuvor hochgepumpte Wasser aus dem Vorratsbehälter zurück durch die Bypassleitung in die Sammelleitung und durch die Öffnungen nach außen. Durch diese Strömung werden die Leitung, die Sammelleitung, die Öffnungen und der Bereich außen vor den Öffnungen effektiv gereinigt.

Neben der Spülung durch das Auslaufen eines Vakuumbehälters sind auch Spülungen aus einem über ein Pumpe gefüllten, unterdruckfreien Behälter denkbar und möglich. Darüber hinaus ist auch die Rückspülung des Systems direkt über eine große Pumpe möglich.

Das Fischschutzsystem dient als Hindernis, um den Einstieg der mit der Strömung ankommenden Aale in das Wasserbauwerk zu verhindern. Zweckmäßig ist es dazu im Oberwasser angeordnet und zwar vor einem möglichen Einstieg in das Wasserbauwerk, beilspielsweise vor dem zuleitenden Rohr einer Turbine eines Wasserkraftwerkes. Vorteilhaft ist auch, wenn das Fischschutzsystem mechanisch ausgebildet ist, beispielsweise in Form eines Rechens. Dadurch wird ein versehentliches Passieren des Fischschutzsystems stets zuverlässig verhindert.

Bei einem Umleitungssystern für Aale zur Umgehung eines Wasserbauwerkes, mit einer im Oberwasser angeordneten Sammelleitung, die im Bereich der Sohle des in Strömungsrichtung fließenden Fliessgewässers angeordnet ist, wenigstens eine Öffnung zur Aufnahme der Aale aufweist und in einer Bypassleitung mündet, sieht die Erfindung vor, dass die Sammelleitung zick-zackförmig ausgebildet ist und dass unterhalb der Sammelleitung wenigstens eine Leitschürze angeordnet ist.

Vorteilhaft ist es dabei, wenn mindestens eine Öffnung der Sammelleitung in einer konkaven Ecke der Sammelleitung ausgebildet ist. Die Aale können auf diese Weise nicht nur durch den Lockstrom zu den Öffnungen geführt werden, sondern auch - wie oben beschrieben - durch die trichterartig auf die Öffnungen zuführende Geometrie der Sammelleitung. Gleichzeitig wird mit Hilfe der Leitschürze ein Unterschwimmen der Sammelleitung wirksam verhindert. Man erkennt, dass es besonders vorteilhaft ist, wenn zwei Leitschürzen vorhanden sind, die jeweils eine leichte Krümmung aufweisen und einander mit der konvexen Seite gegenüberliegen. Die konkave Seite der Leitschürzen weist jeweils in die Richtung aus der ein Heranschwimmen der Aale zu erwarten ist, mithin also in oder gegen die Strömungsrichtung des Fließgewässers.

Weiterhin könnte eine Vorrichtung für den Abstieg von Aalen an Wasserbauwerken mit einem im Oberwasser angeordneten Fischschutzsystem und mit einem Umleitungssystem zur Umgehung des Wasserbauwerkes vorgesehen werden, wobei das Umleitungssystem eine im Oberwasser angeordneten Sammelleitung aufweist, die im Bereich der Sohle des in Strömungsrichtung fließenden Fliessgewässers angeordnet ist, wenigstens eine Öffnung zur Aufnahme der Aale aufweist und in einer Bypassleitung mündet, wobei die Sammelleitung zick-zackförmig ausgebildet ist und wobei unterhalb der Sammelleitung wenigstens eine Leitschürze angeordnet ist.

Man erkennt auch hier, dass es besonders vorteilhaft ist, wenn mindestens eine Öffnung der Sammelleitung in einer konkaven Ecke der Sammelleitung ausgebildet ist.

Im Oberwasser einer solchen Vorrichtung heranschwimmende Aale suchen entsprechend ihrem natürlichen Verhalten zumeist stromaufwärts im Bereich der Sohle des Fließgewässers Schutz, wenn sie auf ein Fischschutzsystem treffen. In diesem unteren Bereich des Fließgewässers gelangen sie dann weiter stromabwärts und treffen dort auf das erfindungsgemäße Umleitungssystem. Dabei können sie beispielsweise versuchen, sich unter der Sammelleitung zu verstecken, was jedoch aufgrund der dort vorhandenen Leitschürzen nicht gelingt. Den Leitschürzen und der zick-zackförmigen Geometrie der Sammelleitung folgend werden sie stattdessen zu einer der konkaven Ecken geführt, in denen sich vorteilhaft die Öffnungen der Sammelleitung befinden. Dabei wirken die zickzackförmige Geometrie der Sammelleitung gemeinsam mit den Leitschürzen wie eine Art Trichter.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen schematischen Längsschnitt durch eine Vorrichtung für den Abstieg von Aalen an Wasserbauwerken
- Fig. 2: einen schematischen Längsschnitt durch den im Oberwasser angeordneten Teil einer Ausführungsform
- Fig. 3: einen schematischen Grundriss des im Oberwasser angeordneten Teils einer Ausführungsform
- Fig. 4: einen schematischen Grundriss des im Oberwasser angeordneten Teils einer weiteren Ausführungsform
- Fig. 5: eine Querschnitt durch eine Ausführungsform der Sammelleitung.

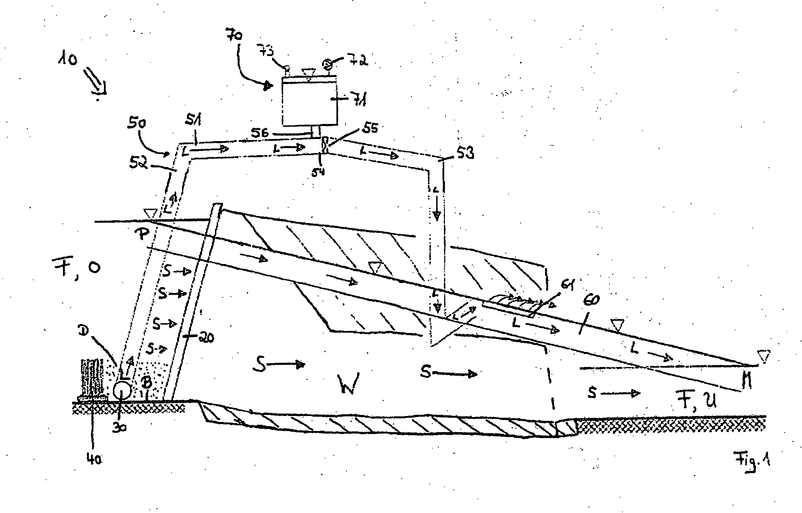

Figur 1 zeigt eine Vorrichtung 10 für den Abstieg von Aalen an Wasserbauwerken. Dabei wird ein Fliessgewässer F in seiner Strömungsrichtung S durch ein Wasserbauwerk W in ein stromaufwärts liegendes Oberwasser O und stromabwärts des Wasserbauwerks W fließendes Unterwasser U unterteilt. Ein Fischschutzsystem in Form eines Rechens 20 ist im Oberwasser O angeordnet. Es versperrt den Lebewesen, die der Strömungsrichtung S im Fließgewässer F folgen, den Einstieg E in das Wasserbauwerk W, das beispielsweise eine Turbine oder ähnliches enthalten kann. Das Fischschutzsystem 20 ist bevorzugt mechanisch als Rechen ausgebildet. Es handelt sich beispielsweise um einen Stabrechen.

Für in oberen Wasserschichten des Oberwassers ankommende Lebewesen ist ein Fischpass 60 zur Umgehung des Wasserbauwerkes vorgesehen, mit einem Eingang P, der beispielsweise im der Nähe der Uferböschung im oberen Wasserbereich zu finden ist. Für im Mittelwasser oder dicht über der Sohle B ankommende Aale ist dagegen eine sohleseitig angeordnete Sammelleitung 30 vorgesehen. Diese mündet in ein Umleitungssystem 50. Letzteres wiederum mündet in den Fischpass 60.

Damit die Sammelleitung 30 für Aale jederzeit gut auffindbar ist, liegt vor dieser im Bereich der Sohle B ein balkenförmiges oder riegelförmiges Element 40, das zwischen sich und dem Fischschutzsysteme 20 einen Strömungsschatten D erzeugt. Dadurch wird die Zuströmung L zu den Öffnungen der Sammelleitung 30 für die Aale deutlich erkennbar. Die Aale können im Schutz des Strömungsschattens nun diesen Zuströmungen L folgen, nachdem sie beispielsweise durch das Fischschutzsystem 20 daran gehindert wurden, der Strömungsrichtung S folgend in das Wasserbauwerk W zu schwimmen.

Sobald ein Aal, der sich beispielsweise in Strömungsrichtung S im Fließgewässer F treiben lässt, vor das Fischschutzsystem 20 gerät, führt er eine nahezu 180° gegenüber der Strömungsrichtung S orientiere Fluchtbewegung aus. Dabei versucht er abzutauchen und im Bereich der Flusssohle B Schutz zu finden. Diesen findet er nun im Strömungsschatten D des vor dem Fischschutzsystem 20 und vor der Sammelleitung 30 liegenden Elements 40. Dort kann er den Zustrom L zu den Öffnungen der Sammelleitung 30 wahrnehmen und diesem in die Sammelleitung folgen. Von der Sammelleitung 30 aus gelangt er zwangsläufig in das für ihn sichere Umleitungssystem 50. Dieses ist in der gezeigten Ausführungsvariante mit einer Bypassleitung 51 ausgebildet, wobei die Sammelleitung 30 direkt in einen als Heberleitung dienenden aufsteigenden Teil 52 der Bypassleitung 51 mündet. Wichtig ist hierbei, dass der oberwasserseitige Einstieg in das Umleitungssystems 50 tief unter Wasser im Oberwasser O und der unterwasserseitige Austritt unter Wasser im Fischpass 60 liegt. Dabei ist der unterwasserseitige Austritt so überstaut, dass in keinem Fall Luft eindringen kann. Der Aal folgt der Strömung L in der Bypassleitung 51 weiter in den absteigenden Teil 53 der Bypassleitung 51 bevor er an der Mündung M der Bypassleitung 51 in den Fischpass 60 gelangt.

Die gezeigte Ausführung mit einer Bypassleitung 51 des Umleitungssystems 50 hat den Vorteil, dass auch bei schwierigen Wasserständen (extremes Hoch- oder Niedrigwasser) ein plötzlicher Druckabfall an den Öffnungen der Sammelleitung 30, bei dem die Tiere zurückschrecken und nicht einwandern, vermieden wird. Dieser könnte ansonsten auch zu Schäden für die mit dem Strom transportierten Tiere führen. Mit Hilfe der gezeigten Bypasslösung werden die Aale und andere die Vorrichtung nutzenden Lebewesen jedoch sicher bei physiologischen Druckverhältnissen und mit kontrollierter Strömungsgeschwindigkeit in den Fischpass 60 und so um das Wasserbauwerk W herum geleitet.

Für kontrollierte und bemessungsgemäße Strömungsverhältnisse im Fischpass ist es außerdem von Vorteil, wenn im Bereich der Bypassmündung M ein Überlauf 61 am Fischpass 60 angeordnet ist. Dieser entlastet eventuell durch die Bypasseinmündung zu groß gewordene Durchflüsse unschädlich in das Unterwasser. Darüber hinaus kann die Beileitung des Durchflusses in den Fischpass dessen Lockstrom im Unterwasser nicht unerheblich verstärken und damit die Auffindbarkeit für aufsteigende Fische verbessern.

Da das Umleitungssystem 50 von Zeit zu Zeit gereinigt werden sollte, um ein Verstopfen zu verhindern, hat das gezeigte Ausführungsbeispiel in Fig. 1 ein Pump- und Spülsystem 70 und im Hochpunkt 54 der Bypassleitung 51 einen Schieber 55. Mit diesem Schieber 55 kann die Bypassleitung 51 verschlossen werden. Weiter verfügt das Pump- und Spülsystem 70 über ein Luftventil 73, das an einem Vorratsbehälter 71 angeordnet ist, und über eine Vakuumpumpe 72. Vorteilhaft ist es, wenn der Vorratsbehälter 71 über einen Seitenanschluss 56 im Hochpunkt 54 mit der Bypassleitung 51 verbunden ist. Zweckmäßig sind die Vakuumpumpe 72 und das Luftventil 73 im Hochpunkt des Vorratsbehälters 71 angeordnet. Dieses Pump- und Spülsystem 70 ist nicht nur für die Reinigung, sondern auch im Hinblick auf die Inbetriebnahme der als Heberleitung funktionierenden Bypassleitung 51 von Vorteil.

Zur Inbetriebnahme ist es zunächst nötig, einen Wasserstrom vom Oberwasser O in das Unterwasser U durch die Bypassleitung 51 herzustellen. Die als Heberleitung ausgebildete Bypassleitung 51 ist dabei am Anfang leer. Der Schieber 55 ist offen, das Luftventil 73 geschlossen. Die Vakuumpumpe 72 saugt dann, sobald sie gestartet wird, die Luft aus der Heberleitung. Dabei steigt durch den erzeugten Unterdruck sowohl im aufsteigenden Ast 52 als auch im abfallenden Ast 53 das Wasser empor. Wenn die Wassersäule im aufsteigenden Ast 52 den Hochpunkt 54 erreicht, beginnt das Wasser durch den abfallenden Ast 53 abzufließen. In dem Moment, wenn dieser Abfluss so groß wird, dass die noch im abfallenden Ast 53 vorhandene Luft durch das Wasser mitgerissen wird, nimmt die Heberleitung 51 ihre Funktion auf und es entsteht eine Sogströmung L zwischen dem Oberwasser O und dem Unterwasser U, entlang derer die Aale transportiert werden können. Die Vakuumpumpe 72 kann dann abgeschaltet werden.

Zur Spülung des Systems wird die Vakuumpumpe 72 wieder gestartet. Sie saugt dann die Luft aus dem Vorratsbehälter 71, so dass dieser sich durch den Seitenanschluss 56 aus der Bypassleitung 51 mit Wasser füllt. Wenn der Vorratsbehälter 71 gefüllt ist, wird bei laufender Heberleitung der Schieber 55 geschlossen. Die Wassersäulen im ansteigenden im abfallenden Ast (52, 53) werden zunächst durch den herrschenden Unterdruck in der Bypassleitung 51 gehalten. Wird nun das Luftventil 73 am Vorratsbehälter 71 geöffnet, so kommt es zum Druckausgleich. Dadurch strömt das hochgepumpte Wasser schlagartig im aufsteigenden Teil der Leitung 52 zurück und spült das Sammelrohr 30, die Öffnungen 31 des Sammelrohres 30 und den Bereich vor den Öffnungen.

Zur anschließenden Wiederinbelriebnahme der als Heberleitung ausgebildeten Bypassleitung 51 bleibt der Schieber 55 zunächst geschlossen. Die Vakuumpumpe 72 wird gestartet und läuft, bis die Bypassleitung 51 im Hochpunkt 54 luftleer ist. Wird dann der Schieber 55 geöffnet, wird die Sogströmung L zwischen Oberwasser O und Unterwasser U wieder hergestellt. Die Aale können nun wieder der Strömung L folgend durch die Bypassleitung 51 vom Oberwasser O ins Unterwasser U transportiert werden.

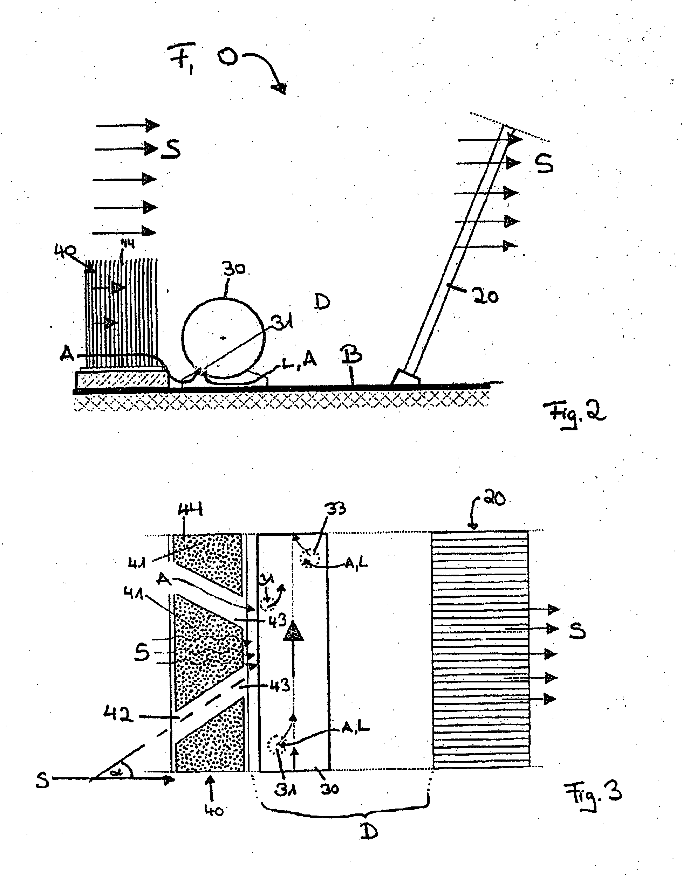

Man erkennt in Fig. 2 dass die Sammelleitung 30 als Rohr ausgebildet ist, was einem einfachen Aufbau der Vorrichtung zu Gute kommt. Die Sammelleitung ist auf einem Sockel 32 auf der Sohle B des Fließgewässers angeordnet. Dabei bleiben die Öffnungen 31, 33 der Sammelleitung 30 frei. Diese sind in der gezeigten Ausführungsvariante zur Sohle B hin ausgerichtet und zwar überwiegend auf der der ankommenden Strömung des Fliessgewässers zugewandten Seite der Sammelleitung 30. Dadurch sind sie besonders gut sowohl für die Aale, die sich in den Strömungsschatten zurückgezogen haben, als auch für an der Sohle B ankommende Aale A zu erreichen. Diese passieren das Strömungsschatten erzeugende Element 40 beispielsweise im Bereich einer der Durchschlupföffnungen 42 und können direkt durch eine der Öffnungen 31 in die Sammelleitung 30 schwimmen. Aale die sich im Bereich des Strömungsschattens D befinden, können die Sogströmung wahrnehmen und werden entweder ebenfalls durch die Öffnungen 31 in die Sammelleitung gelockt. Oder sie können eine in Strömungsrichtung S angeordnete Öffnung 33 zum Einstieg in die Sammelleitung 30 nutzen.

Das den Strömungsschatten erzeugende Element 40 ist, wie im Ausführungsbeispiel der Fig. 2 gezeigt, aus Borstenelementen 41 gefertigt. Die Borsten 44 sind aus flexiblem Kunststoff ausgebildet, was den Vorteil hat, dass eine Vegetation der Sohle nachgeahmt wird. Andere Ausführungsformen sind denkbar. Weiter können die Borstenelemente 41 wie im Ausführungsbeispiel eine trapezförmige Grundfläche haben und so angeordnet sein, dass die Grundflächen der aufeinander folgenden Borstenelemente 41 abwechselnd spiegelverkehrt angeordnet sind. Auf diese Weise können ohne weitere Mittel allein durch die Anordnung der Borstenelemente 41 Durchschlupföffnungen 42 im Strömungsschatten erzeugenden Element 40 geschaffen werden (siehe Fig. 3). Diese sind vorteilhafterweise nicht direkt in Strömungsrichtung S, sondern in einem Winkel α dazu angeordnet. Dadurch wird die Strömung bereits in der Durchschlupföffnung 42 abgeschwächt und es wird verhindert, dass es im Bereich der Einmündung 43 der Durchschlupföffnungen 42 in den Bereich des Strömungsschattens D zu irritierenden Turbulenzen kommt.

Weiterhin stehen die Borstenelemente 41 der in Strömungsrichtung S ankommenden Strömung des Fließgewässers nicht massiv gegenüber, sondern sie sind in einem gewissen Maß für die Strömung durchlässig. Dies verhindert ebenfalls einen abrupten Strömungsstopp und das Entstehen von irritierenden Turbulenzen hinter dem Element 40. Dabei ist es von Vorteil, wenn die Borsten 44 elastisch ausgebildet sind. Sie können so durch die Strömung in Vibration versetzt werden. Das führt dazu, dass sich die Borstenelemente 41 zu einem gewissen Grad selbst reinigen.

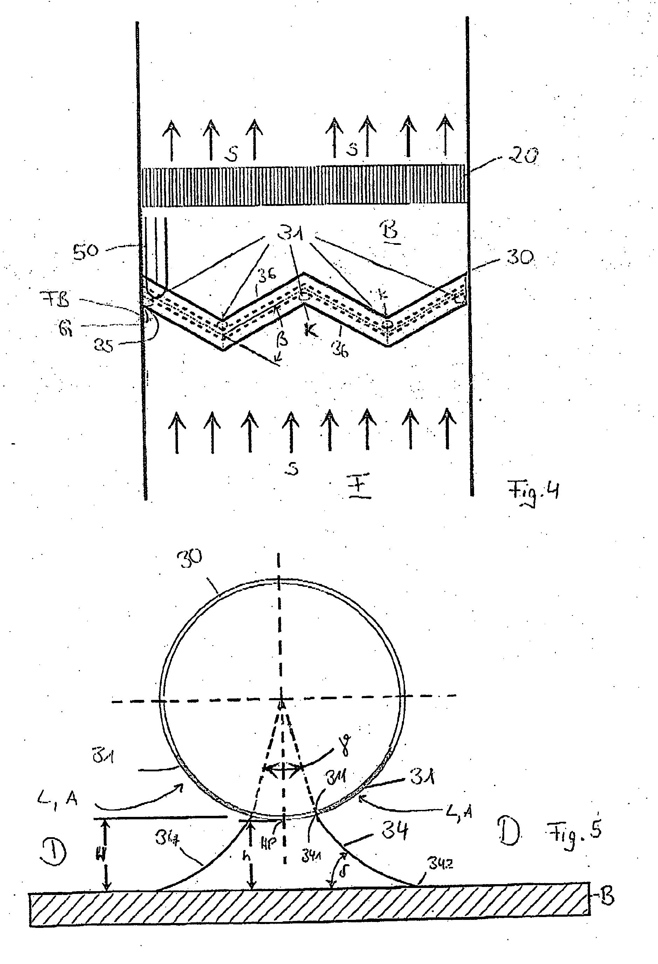

Fig. 4 und Fig. 5 zeigen eine weitere Ausführungsvariante der Sammelleitung 30 für eine erfindungsgemäße Vorrichtung und für ein erfindungsgemäßes Umleitungssystem. In Fig. 4 ist die Sammelleitung 30 zick-zackförmig über der Sohle B des Fließgewässers F angeordnet. Dabei kann der Knickwinkel β der Sammelleitung zwischen 0° und 90°, bevorzugt zwischen 45° und 80°, besonders bevorzugt 60° betragen. Die Öffnungen 31 sind in den konkaven Ecken K der Sammelleitung 30 angeordnet und somit abwechselnd in und gegen die Strömungsrichtung S geöffnet. Auf diese Weise wirken die Schenkel 36 der Sammelleitung 30, die eine der konkaven Ecken K einschließen wie ein Trichter, der die Aale auf die Öffnung 31 zuleitet. Man erkennt, dass damit das Auffinden der Öffnungen 31 für die Aale noch über den Reiz des Lockstroms L hinaus deutlich erleichtert werden kann. Hilfreich ist es dabei auch, wenn am jeweiligen Ende 35 der Sammelleitung 30 in der Ecke G, die von der Seitenwand FB des Fließgewässers F und dem Ende 35 eingeschlossen wird eine weitere Öffnung 31 ausgebildet ist.

Man erkennt ohne weiteres, dass es auch bei dieser Ausführungsvariante denkbar ist, ein Strömungsschatten erzeugendes Element 40 entsprechend den zuvor dargestellten Ausführungsbeispielen stromaufwärts der Sammelleitung 30 anzuordnen.

Günstig ist es auch, wenn - wie in Fig. 5 gezeigt - unterhalb der Sammelleitung 30 mindestens eine, bevorzugt zwei Leitschürzen 34 angeordnet sind. Dabei kann es sich beispielsweise um ein gebogenes Blech oder ein aufgesägtes Kunststoffrohr handeln, welches unter einem gewissen Winkel δ zur Sohle B des Fließgewässers F angeordnet wird. Der Winkel δ beschreibt dabei, wie stark der Rohrabschnitte oder das gebogene Blech gegenüber der Sohle gekippt ist, bevorzugt werden Winkel zwischen 0 und 45°, besonders bevorzugt zwischen 0 und 22°, ganz besonders bevorzugt 15°.

Man erkennt in Fig. 5, dass sowohl das der Sammelleitung 30 zugewandte Ende 341 als auch das der Sohle B zugewandte Ende 342 der Leitschürze 34 derart bündig an Sammelleitung 30 und Sohle B abschließen, dass es den Aalen unmöglich ist, zwischen Sammelleitung 30 und Sohle B hindurchzuschwimmen. Die Tiere verbleiben vielmehr im Strömungsschatten D auf der einmal gewählten Seite der Sammelleitung 30 und können entlang der Leitschürzen 34 dem Lockstrom L bis hin zu einer der auf der entsprechenden Seite angeordneten Öffnungen 31 folgen. Bei dieser Art der Bauweise ist es auch vorstellbar, dass sich zwei Öffnungen 31 auf beiden Seiten der Sammelleitung 30 unmittelbar gegenüberliegen.

Man erkennt weiter, dass das der Sammelleitung 30 zugewandte Ende 341 der Leitschürze 34 im Bereich der Öffnungen 31 unmittelbar am unteren Öffnungsrand 311 abschließt. An der Leitschürze 34 entlang schwimmende Aale können dadurch ohne weiteres Hindernis - dem Lockstrom L folgend - in die Öffnungen 31 gelangen. Günstig ist es dabei, wenn das untere Ende 311 der Öffnungen 31 nicht direkt im Scheitelpunkt HP der Sammelleitung 30 angeordnet ist, sondern um einen Winkel γ/2 davon entfernt ist. γ kann dabei zwischen 0 und 180°, bevorzugt zwischen 0 und 90°, besonders bevorzugt 30° betragen. Man erkennt, dass damit der Abstand H zwischen dem unteren Ende der Öffnung 311 und der Sohle B bevorzugt größer ist als der Abstand h zwischen dem Scheitelpunkt HP der Sammelleitung 30 und der Sohle B.

Bei einer weiteren (nicht dargestellten) Ausführungsform können die Sammelleitung 30 und sofern vorhanden das Strömungsschatten erzeugende Element 40 zur Inspektion und Reinigung auf seitlichen Gleitschienen aus dem Wasser gehoben werden. Die Verbindung zur Bypassleitung 51 kann dabei beispielsweise durch eine automatische Kupplung realisiert werden.

Die Erfindung ist nicht auf eine der vorbeschriebenen Ausführungsformen beschränkt, sondern in vielfältiger Weise abwandelbar, So ist vorstellbar, dass das Umleitungssystem 50 nicht nur mit einem, sondern auch mit zwei Schiebern 55 ausgestattet ist. Dabei kann einer vor- und einer nach dem Seitenanschluss 56 angeordnet sein. In diesem Fall wäre es möglich zur Spülung des aufsteigenden Teils 52 der Bypassleitung 51 den nach dem Seitenanschluss 56 angeordneten Schieber 55 zu schließen, zur Spülung des absteigenden Teils 53 der Bypassleitung 51 jedoch den vor dem Seitenanschluss 56 angeordneten.

Bei dem Fischabweiser 20 muss es sich nicht zwingend um einen Rechen handeln, auch ein Rollrechen aus Netzgewebe oder ähnliches ist vorstellbar. Auch muss der Fischabweiser 20 nicht zwingend rein mechanisch ausgebildet sein, denn es sind auch Kombinationen von beispielsweise mechanischen und elektrischen Fischschutzeinnchtungen denkbar. Vorstellbar ist auch die Unterstützung des mechanischen Fischabweisers 20 durch Lichtsignale oder gezielt erzeugte Wasserturbulenzen, beispielsweise mit Hilfe von Luftblasenströmen. Weitere Variationen sind denkbar, z.B. das Einbringen von Duftlockstoffen.

Die Sammelleitung 30 kann anstelle eines Rohres, das beispielsweise aus Kunststoff gefertigt ist, auch ein gemauerter oder aus Beton gegossener Kanal sein. Dies ist zwar aufwändiger in der Fertigung, aber eine unter Umständen beständigere und weniger reparaturanfällige Lösung. Um eine einfache Kontrollmöglichkeit zu haben, könnten die Sammelleitung 30 und das Strömungsschatten erzeugende Element 40 auch auf einer gemeinsamen Grundplatte angebracht sein, die mit einem Kran oder mit dem entsprechend ausgerüsteten Rechenreiniger zu Revisionszwecken aus dem Wasser gehoben werden kann. Dazu kann an dem aufsteigenden Ast 53 der Bypassleitung 51 eine lösbare Rohrkupplung angebracht werden.

Bei der Seitenwand FB des Fließgewässers F kann es sich sowohl um eine natürliche Böschung oder sonstige Flussbettbegrenzung als auch um eine künstlich angebrachte Seitenwand zur Einfassung des Wasserbauwerkes W handeln.

Auch das Strömungsschatten erzeugende Element 40 bietet vielfältige Möglichkeiten zur Ausgestaltung. Alternativ zu den im Ausführungsbeispiel gezeigten Borstenelementen 41, sind auch versetzt zu einander angeordnete segelähnliche Flächenelemente denkbar. Diese können beispielsweise elastisch ausgebildet sein und so, ähnlich wie die Borstenelemente 41 Pflanzenbewuchs der Flusssohle simulieren. Auch ist es denkbar, dass der Strömungsschatten D mit Hilfe von Natursteinen, die stromaufwärts vor der Sammelleitung 30 angeordnet sind, erzeugt ist.

Bei vorstellbaren weiteren Ausführungsformen können Durchströmöffnungen, die im Element 40 ausgebildet sind, unerwünschte Turbulenzen im Strömungsschatten D vermeiden. So ist vorstellbar, dass anstelle der Borstenelemente ein Block aus weichem Kunststoffmaterial mit Durchschlupf- und Durchströmöffnungen durchbohrt wird, oder dass solch ein Block in verschiedenen Richtungen eingeschnitten oder zurecht gesägt werden kann.

### Bezugszeichenliste

- A: Schwimmrichtung eines Aals
- B: Sohle des Fließgewässers
- D: Strömungsschatten
- E: Einstieg in das Wasserbauwerk
- F: Fließgewässer
- FB: Seitenwand
- G: Ecke
- H. h: Höhe der Sammelleitung über der Sohle
- HP: Scheitelpunkt der Sammelleitung
- K: konkave Ecke der Sammelleitung
- L: Lockstrom
- M: Mündung der Bypassleitung
- O: Oberwasser
- S: Strömungsrichtung
- U: Unterwasser
- W: Wasserbauwerk

- α: Winkel zwischen der Strömungsrichtung und der Durchschlupföffnung
- β: Knickwinkel der Sammelleitung
- γ,δ: Winkel

- 10: Vorrichtung für den Abstieg von Aalen an Wasserbauwerken

- 20: Fischabweiser
- 21: Verkleidung

- 30: Sammelleitung
- 31: Öffnung entgegen der Strömungsrichtung S
- 311: unteres Ende der Öffnung
- 32: Sockel
- 33: Öffnung mit der Strömungsrichtung S
- 34: Leitschürze

- 341: Ende der Leitschürze
- 342: Ende der Leitschürze

- 40: Strömungsschatten erzeugendes Element
- 41: Borstenelement
- 42: Durchschlupföffnung
- 43: Einmündung der Durchschlupf- öffnung
- 44: Borsten

- 50: Umleitungssystem
- 51: Bypassleitung

- 52: Aufsteigender Teil der Bypassleitung
- 53: Absteigender Teil der Bypassleitung
- 54: Hochpunkt
- 55: Schieber
- 56: Seitenanschluss

- 60: Fischpass
- 61: Überlauf

- 70: Pump- und Spülsystem
- 71: Vorratsbehälter
- 72: Vakuumpumpe
- 73: Luftventil

## Patentansprüche

1. Vorrichtung (10) für den Abstieg von Aalen an Wasserbauwerken mit einem im Oberwasser (O) angeordneten Fischschutzsystem (20) und mit einem Umleitungssystem (50) zur Umgehung des Wasserbauwerkes, das zur Aufnahme der Aale im Oberwasser (O) wenigstens eine Sammelleitung (30) mit wenigstens einer Öffnung (31) aufweist, die im Bereich der Sohle (B) des in Strömungsrichtung (S) fließenden Fliessgewässers (F) angeordnet ist, wobei stromaufwärts der Öffnung (31) oder der Öffnungen (31) der Sammelleitung (30) ein Strömungsschatten erzeugendes Element (40) angeordnet ist, **dadurch gekennzeichnet, dass** das Strömungsschatten erzeugende Element (40) an der Sohle (B) des Fließgewässers (F) angeordne und riegelförmig oder balkenförmig ausgebildet ist und dass das Strömungsschatten erzeugende Element (40) Durchschlupföffnungen (42) aufweist, wobei die Durchschlupföffnungen in einem Winkel (α) zur Strömung (S) angeordnet sind.

2. Vorrichtung nach Anspruch 1, **dadurch gekennzeichnet, dass** das Strömungsschatten erzeugende Element (40) aus Borstenelementen (41) besteht.

3. Vorrichtung nach einem der Ansprüchen 1 bis 2, **dadurch gekennzeichnet, dass** die Sammelleitung (30) quer zur Strömungsrichtung (S) angeordnet ist.

4. Vorrichtung nach einem der Ansprüche 1 bis 3, **dadurch gekennzeichnet, dass** die Öffnungen (31) der Sammelleitung (30) in und/oder entgegen der Strömungsrichtung (S) ausgerichtet sind.

5. Vorrichtung nach einem der Ansprüche 1 bis 4, **dadurch gekennzeichnet, dass** die Öffnungen (31) der Sammelleitung (30) im Bereich des von dem Strömungsschatten erzeugenden Elementes (40) erzeugten Strömungsschatten (D) liegen.

6. Vorrichtung nach einem der Ansprüche 1 bis 5, **dadurch gekennzeichnet, dass** die Sammelleitung (30) zick-zack-förmig ausgebildet ist und mindestens eine konkave Ecke (K) aufweist.

7. Vorrichtung nach Anspruch 6, **dadurch gekennzeichnet, dass** mindestens eine Öffnung (31) der Sammelleitung (30) in einer konkaven Ecke (K) der Sammelleitung (30) ausgebildet ist.

8. Vorrichtung nach einem der Ansprüche 1 bis 7, **dadurch gekennzeichnet, dass** unterhalb der Sammelleitung (30) wenigstens eine Leitschürze (34) angeordnet ist.

9. Vorrichtung nach einem der Ansprüche 1 bis 8, **dadurch gekennzeichnet, dass** das Umleitungssystem (50) eine Bypassleitung (51) aufweist und dass die Sammelleitung (30) in die Bypassleitung (51) mündet.

10. Vorrichtung nach einem der Ansprüche 1 bis 9, **dadurch gekennzeichnet, dass** die Bypassleitung (51) in einen Fischpass (60) mündet, wobei an dem Fischpass (60) stromabwärts der Mündung der Bypassleitung (51) ein Überlauf (61) ausgebildet ist.

## Claims

1. Apparatus (10) for the downstream migration of eels at hydraulic structures, having a fish protection system (20) arranged in the upstream waters (O) and having a diversion system (50) for circumventing the hydraulic structure, which comprises at least one collecting pipe (30) for receiving the eels in the upstream waters (O), said collecting pipe (31) having at least one opening which is arranged in the region of the bed (B) of the watercourse (F) flowing in the flow direction (S), while upstream of the opening (31) or openings (31) of the collecting pipe (30) is arranged an element (40) that produces a flow shadow, **characterised in that** the flow shadow-producing element (40) is arranged on the bed (B) of the watercourse (F) and is bar-shaped or beam-shaped, and **in that** the flow shadow-producing element (40) comprises slip-through openings (42), the slip-through openings being arranged at an angle (α) to the flow (S).

2. Apparatus according to claim 1, **characterised in that** the flow shadow-producing element (40) consists of bristle elements (41).

3. Apparatus according to one of claims 1 to 2, **characterised in that** the collecting pipe (30) is arranged transversely with respect to the direction of flow (S).

4. Apparatus according to one of claims 1 to 3, **characterised in that** the openings (31) of the collecting pipe (30) are aligned in, and/or counter to, the direction of flow (S).

5. Apparatus according to one of claims 1 to 4, **characterised in that** the openings (31) in the collecting pipe (30) are located in the region of the flow shadow (D) produced by the flow shadow-producing element (40).

6. Apparatus according to one of claims 1 to 5, **characterised in that** the collecting pipe (30) is of zigzag configuration and has at least one concave corner (K).

7. Apparatus according to claim 6, **characterised in that** at least one opening (31) of the collecting pipe (30) is formed in a concave corner (K) of the collecting pipe (30).

8. Apparatus according to one of claims 1 to 7, **characterised in that** at least one deflecting apron (34) is arranged underneath the collecting pipe (30).

9. Apparatus according to one of claims 1 to 8, **characterised in that** the deflecting system (50) comprises a bypass pipe (51) and **in that** the collecting pipe (30) opens into the bypass pipe (51).

10. Apparatus according to one of claims 1 to 9, **characterised in that** the bypass pipe (51) opens into a fish pass (60), an overflow (61) being formed on the fish pass (60) downstream of the mouth of the bypass pipe (51).

## Revendications

1. Dispositif (10) pour la descente d'anguilles au niveau d'ouvrages hydrauliques avec un système de protection de poissons (20) agencé dans l'eau d'amont (0) et avec un système de déviation (50) qui est destiné au contournement de l'ouvrage hydraulique et qui comporte au moins une conduite collectrice (30), laquelle est destinée à recevoir les anguilles dans l'eau d'amont (0) et est munie d'au moins une ouverture (31) qui est agencée dans la zone du fond (B) des eaux courantes (F) coulant dans le sens du courant (S), un élément (40) qui produit des zones protégées du courant étant alors agencé en amont de l'ouverture (31) ou des ouvertures (31) de la conduite collectrice (30), **caractérisé en ce que** l'élément (40) qui produit des zones protégées du courant est agencé au fond (B) des eaux courantes (F) et est conçu en forme de traverse ou de poutre et **en ce que** l'élément (40) qui produit des zones protégées du courant comporte des orifices de passage (42), les orifices de passage étant agencés suivant un angle (α) par rapport au courant (S).

2. Dispositif selon la revendication 1, **caractérisé en ce que** l'élément (40) qui produit des zones protégées du courant est constitué d'éléments du type poils de brosserie (41).

3. Dispositif selon l'une des revendications 1 à 2, **caractérisé en ce que** la conduite collectrice (30) est agencée transversalement par rapport au sens du courant (S).

4. Dispositif selon l'une des revendications 1 à 3, **caractérisé en ce que** les ouvertures (31) de la conduite collectrice (30) sont orientées dans le sens du courant (S) et/ou à l'opposé.

5. Dispositif selon l'une des revendications 1 à 4, **caractérisé en ce que** les ouvertures (31) de la conduite collectrice (30) se trouvent dans les zones (D) protégées du courant qui sont produites par l'élément (40) qui produit des zones protégées du courant.

6. Dispositif selon l'une des revendications 1 à 5, **caractérisé en ce que** la conduite collectrice (30) est conçue en forme de zigzag et comporte au moins un coin concave (K).

7. Dispositif selon la revendication 6, **caractérisé en ce qu'**au moins une ouverture (31) de la conduite collectrice (30) est conçue dans un coin concave (K) de la conduite collectrice (30).

8. Dispositif selon l'une des revendications 1 à 7, **caractérisé en ce qu'**au moins une jupe de guidage (34) est agencée en dessous de la conduite collectrice (30).

9. Dispositif selon l'une des revendications 1 à 8, **caractérisé en ce que** le système de déviation (50) comporte une conduite de dérivation (51) et **en ce que** la conduite collectrice (30) débouche dans la conduite de dérivation (51).

10. Dispositif selon l'une des revendications 1 à 9, **caractérisé en ce que** la conduite de dérivation (51) débouche dans une passe à poissons (60), un déversoir (61) étant conçu au niveau de la passe à poissons (60) en aval du débouché de la conduite de dérivation (51).
